# EUROPÄISCHE PATENTANMELDUNG

(11) **EP 1 059 207 A1**
(43) Veröffentlichungstag der Anmeldung: **13.12.2000**
(21) Anmeldenummer: 99111429.9
(22) Anmeldetag: 11.06.1999
(51) Int. Cl.: B60R 21/02

(54) **Fahrgastrückhaltesystem**

(71) Anmelder: Maurer Söhne GmbH & Co. KG, 80807 München (DE)
(72) Erfinder: Heilmeier, Günter, 80809 München (DE); Distelrath, Volker, c/o Maurer Söhne GmbH & Co.KG, 80807 München (DE)
(74) Vertreter: Herrmann-Trentepohl, Werner, Dipl.-Ing.

(57) **Zusammenfassung**

Fahrgastrückhaltesystem mit einem Sitz und einem den Fahrgast darin haltenden Fahrgasthaltebügel (12) sowie einer formschlüssig wirkenden Sperreinrichtung, die aus zwei verschiedenen formschlüssig wirkenden Sperrsystemen (18,19;20,21) besteht, die in ihrem aktivierten Zustand jeweils für sich allein den Fahrgasthaltebügel (12) in Aufschwenkrichtung sperren,
wobei die Sperrorgane (18,19) des einen Sperrsystemes mit einem Spiel ineinandergreifen, welches das Weiterschließen des Fahrgasthaltebügels ermöglicht, während die Sperrorgane (20,21) des anderen Sperrsystems durch das Weiterschließen aus einer bestehenden Eingriffsstellung in eine andere, den Fahrgasthaltebügel (12) in einer neuen Position gegen Aufschwenken verriegelnde Eingriffsstellung gebracht werden.

## Beschreibung

Die Erfindung betrifft ein Fahrgastrückhaltesystem für Fahrgeschäfte, wie z.B. Achterbahnen. Bei solchen Fahrgastrückhaltesystemen werden die Fahrgäste mit einem starren Fahrgasthaltebügel im Sitz der Gondel, ähnlich wie durch einen aus dem Kraftfahrzeugbereich bekannten Anschnallgurt, gegen die auftretenden Beschleunigungs- und Schwerkräfte gesichert. Der Fahrgasthaltebügel ist mit einer Sperreinrichtung ausgerüstet, die ihn während der Fahrt zuverlässig geschlossen hält. Aus Sicherheitsgründen wird durchweg gefordert, daß die Sperreinrichtung formschlüssig arbeitet.

Der Sperreinrichtung wird eine hohe Sicherheit gegen Versagen oder unbeabsichtigtes Öffnen abverlangt.

Darüber hinaus werden an die Sperreinrichtung im wesentlichen zwei Anforderungen gestellt:

Die Sperreinrichtung muß unabhängig vom Körperbau des jeweiligen Fahrgastes den Fahrgasthaltebügel gegen ein Wiederöffnen verriegeln, wenn der Fahrgast-haltebügel über einen als "Beginn des Rückhaltebereiches" zu bezeichnenden Punkt hinaus auf den Fahrgast zugeschwenkt wurde.

Weiterhin wird gefordert, daß es möglich sein muß, den verriegelter Stellung Fahrgasthaltebügel nachzuzurren, um dem Fahrgast in Abhängigkeit von seiner individuellen Statur bestmöglichen Rückhalt bieten zu können. Unter einem Nachzurren wird dabei verstanden, daß der Fahrgasthaltebügel bei aktivierter Sperreinrichtung in eine noch enger am Körper des Fahrgastes anliegende Position geschwenkt und in dieser Position formschlüssig verriegelt wird. Dabei muß das Nachzurren möglich sein, ohne daß die formschlüssige Verriegelung des Fahrgasthaltebügels gegen ein Wiederaufschwingen in eine nicht mehr dem Rückhaltebereich zuzuordnende Stellung auch nur vorübergehend aufgehoben wird.

Bislang wird eine diesen Anforderungen entsprechende Sperreinrichtung durch ein System realisiert, welches sich am treffendsten als zweifaches Klinkengesperre bezeichnen läßt. Das Haupt-Klinkengesperre verriegelt den Fahrgasthaltebügel. Ein zusätzliches Sicherheits-Klinkengesperre verriegelt die Klinke des Haupt-Klinkengesperres, trägt aber selbst unter keinen Umständen dazu bei, die in Öffnungsrichtung auf den Fahrgasthaltebügel wirkenden Momente abzufangen.

Das Haupt-Klinkengesperre ist wie folgt aufgebaut:

Der drehbar am Fahrgestell gelagerte Fahrgasthaltebügel trägt, zumindest an einem Ende, eine Nocke, an deren Flanke eine Anzahl von Rastflächen für eine Klinke angebracht sind. Die Nockenspitze ist als abgeflachter Bereich ausgeführt. Die Nocke arbeitet mit der Sperrklinke des Haupt-Klinkengesperres zusammen. Wenn der Fahrgasthaltebügel eine offenen Stellung, d. h. eine Stellung, die nicht dem Rückhaltebereich zugeordnet ist, einnimmt, liegt die Sperrklinke auf dem abgeflachten Bereich an der Stirnseite der Nocke auf. Das Haupt-Klinkengesperre wird dadurch in offener Stellung gehalten. Sobald der Fahrgasthaltebügel soweit auf den Fahrgast zugeschwenkt wurde, daß die Grenze von seinem Öffnungsbereich zum Rückhaltebereich überschritten ist, fällt die federgespannte Haupt-Sperrklinke auf die äußerste Rastfläche an der Nockenflanke. Der Fahrgasthaltebügel ist damit formschlüssig gegen ein Wiederöffnen gesichert. Gleichzeitig blockiert die Sicherheits-Sperrklinke die erste Sperrklinke und verhindert damit zuverlässig, daß diese außer Eingriff mit der Nocke kommt. Beim Nachzurren fällt die Haupt-Sperrklinke Schritt für Schritt auf tiefer an der Nockenflanke gelegenen Rastflächen. Die Sicherheits-Sperrklinke rückt jeweils nach und verriegelt die Haupt-Sperrklinke in ihrer neuen Position.

Während des Nachzurrens ist der Fahrgasthaltebügel ohne Unterbrechung formschlüssig gegen ein Wiederaufschwingen in seinen Öffnungsbereich gesichert. Denn dadurch, daß die Rastflächen an der Nocke radial auswärts übereinanderliegen, d. h. die Hauptklinke beim Nachzurren auf Rastflächen fällt, die auf einem immer kleineren Umfang der Nocken liegen, ist die Verriegelung auch während des Nachzurrens jederzeit formschlüssig von der Haupt-Sperrklinke gegen ein völliges Aufschwingen des Fahrgasthaltebügels gesichert.

Die bekannte Konstruktion hat jedoch unter Festigkeitsgesichtspunkten einen erheblichen Nachteil.

Beim Betrieb moderner Fahrgeschäfte treten ganz erhebliche Beschleunigungen auf, weshalb von der Sperreinrichtung hohe, in Öffnungsrichtung des Fahrgast-haltebügels wirkende Drehmomente abgefangen werden müssen. Bei der vorliegenden Konstruktion besteht die allein sperrend wirkende Fläche der Hauptklinke aus einem einzigen, zahnartigen Abschnitt, der stets nur mit einer einzigen Rastfläche im Eingriff steht. Daher treten an der Haupt-Sperrklinke extrem hohe Pressungen auf. Die Haupt-Sperrklinke ist damit nicht nur im Hinblick auf ein Versagen durch Dauerbruch nach einer Vielzahl von Lastspielen gefährdet. Vielmehr besteht zugleich die Gefahr, daß die Sperrklinke schon bei einer einmaligen starken Überlastung plastisch deformiert wird, was zu einem Ausschlagen, d. h. letztendlich zu einem unzulässigen Präszisionsverlust des Hauptgesperres führt.

Die bekannte Konstruktion hat zudem den Nachteil, daß sie mit den zwei Klinken und der relativ komplizierten Mechanik, die erforderlich ist, um die Klinken zur Entriegelung bei Fahrtende zu lüften, aus einer Vielzahl von bewegten Bauteilen besteht, die zum Teil sehr weitläufige Schwenkbewegungen ausführen.

Der Erfindung liegt daher die Aufgabe zugrunde, eine kompakte Sperreinrichtung zu schaffen, die bei optimierter Belastbarkeit aus wenigen beweglichen Bauteilen besteht.

Diese Aufgabe wird dadurch gelöst, daß die Sperreinrichtung aus zwei unabhängigen, formschlüssig wirkenden Sperrsystemen besteht, die in ihrem aktivierten Zustand jeweils für sich allein den Fahrgasthaltebügel in Aufschwenkrichtung sperren. Denn dabei greifen die Sperrorgane des einen Sperrsystemes so ineinander, daß zwischen ihnen Verdrehspiel besteht, welches ein Schwenken des Fahrgasthaltebügels in eine näher am Körper des Fahrgastes anliegende Position ermöglicht. Die Sperrorgane des anderen Sperrsystems sind dabei so gestaltet, daß sie beim Schwenken des Fahrgasthaltebügels in eine näher am Körper des Fahrgastes anliegende Position so gegeneinander verschoben werden, daß sie das Verdrehspiel in Aufschwenkrichtung eliminieren. Indem erfindungsgemäß die einzelnen Funktionen, die die Sperreinrichtung insgesamt zu erbringen hat, entkoppelt und auf zwei verschiedene Sperrsysteme verteilt werden, besteht für jedes Sperrsystem eine größere Gestaltungsfreiheit. Jedes Sperrsystem kann daher bereits konstruktiv im Hinblick auf eine optimale Tragfähigkeit optimiert werden.

Gemäß einer besonders vorteilhaften Weiterbildung der Erfindung ist vorgesehen, daß die Sperreinrichtung als eine durch axiale Verschiebung lüftbare Wellen-Kupplung ausgeführt ist, deren Kupplungshälften jeweils die komplementären Sperrorgane beider Sperrsysteme tragen, wobei eine Kupplungshälfte am Fahrgasthaltebügel festgelegt ist und die andere Kupplungshälfte axial verschiebbar und unverdrehbar gestellfest gehalten ist. Die Integration der beiden Sperrsysteme zu einer Kupplung führt zu einer besonders kompakten Bauform. Zudem wird mit der am Gestell axial verschiebbaren Kupplungshälfte lediglich noch ein einziges bewegliches Bauteil benötigt. Die Kupplung kann infolge ihrer kompakten Bauform und ihrer einfachen Kinematik gekapselt und mit einer Dauerschmierung versehen werden.

Nach einer besonders vorteilhaften Ausgestaltung ist vorgesehen, daß ein Verbindungssystem als ein mit Verdrehspiel ineinandergreifender Klauensatz und das anderer Verbindungssystem aus einer Paarung von sich an beiden Kupplungshälften ganz oder teilweise gegenüberliegenden Stirnverzahnungen ausgeführt ist. Diese Ausführung hat mehrere Vorteile. Eine Klauenkupplung ist hochbelastbar. Die Stirnflächen der Klauen können bei gelüfteter Kupplung aufeinanderliegen und so die Kupplung offenhalten. Eine Klauenkupplung ist fertigungstechnisch einfach herzustellen. Eine Stirnverzahnung ermöglicht ein fein abgestuftes Einkuppeln in einer Vielzahl dicht nebeneinanderliegender Positionen. Gleichwohl weist eine Stirnverzahnung eine hohe Tragfähigkeit auf, da stets mehrere Zähne im Eingriff stehen und so eine günstige Lastverteilung gegeben ist. Schließlich ist eine Stirnverzahnung auch fertigungstechnisch günstig herzustellen, da eine Vielzahl standardisierter Werkzeuge und Werkzeugmaschinen zur Verfügung stehen. Da die Stirnflächen der Klauen das Offenhalten der Kupplung übernehmen, können die Zahnköpfe sehr schmal ausgeführt werden, wodurch der Totgang zwischen aufeinanderfolgenden Eingriffsstellungen verringert wird.

Eine besonders vorteilhafte Weiterbildung der Erfindung sieht vor, daß die Klauen bei eingerückter Kupplung in axialer Richtung so weit ineinandergreifen, daß die verzahnten Abschnitte der Kupplungshälften beim Nachzurren außer Eingriff gebracht werden können, ohne daß auch die Klauen außer Eingriff kommen. Durch diese Gestaltung ist sichergestellt, daß der Fahrgasthaltebügel auch im ungünstigsten Extremfall zuverlässig formschlüssig gegen ein Aufschwenken aus dem Rückhaltebereich heraus gesichert ist. Zwar ist dieser Extremfall mehr theoretischer Natur, muß aber dennoch entsprechend den einschlägigen Sicherheitsvorschriften beherrscht werden. Dieser Extremfall tritt dann ein, wenn der Fahrgast während der Fahrt den Fahrgasthaltebügel zu sich heranzieht, um ihn nachzuzurren, und gerade in dem Augenblick, indem sich die Stirnverzahnungen "Zahnkopf an Zahnkopf" gegenüberstehen, der Fahrgasthaltebügel schlagartig in Öffnungsrichtung stark belastet wird. In diesem Fall läßt es sich nicht ausschließen, daß der Fahrgasthaltebügel so schnell und kraftvoll aufgeschwenkt wird, daß die Stirnverzahnungen nicht genügend Zeit finden, um tief genug ineinander einzugreifen. Die Stirnverzahnungen können dann (gegebenenfalls unter plastischer Deformation) auch in Öffnungsrichtung aufeinander abgleiten, sodaß der Bügel so weit aufgeschwenkt werden kann, daß er seine Sicherungsfunktion nicht mehr erfüllt. Selbst ein solches Aufschwenken wird jedoch von der Klauenkupplung zuverlässig gestoppt, bevor der Fahrgasthaltebügel den Rückhaltebereich verläßt.

Eine besonders vorteilhafte Weiterbildung der Erfindung sieht vor, daß beide Kupplungshälften in ihrer Umfangsrichtung nur an einem oder mehreren Abschnitten mit einer Verzahnung versehen sind, wobei an einer Kupplungshälfte sich der verzahnte Abschnitt über einen kleineren Bogenabschnitt erstreckt, als der verzahnte Abschnitt an der ihr zugeordneten Kupplungshälfte. Aufgrund dessen läßt sich bei annähernd gleicher Tragfähigkeit eine Kostenersparnis erreichen, wenn an einer Kupplungshälfte die Anzahl der Zähne, die für eine hinreichende Tragfähigkeit gebraucht werden, vorgesehen wird und an der anderen Kupplungshälfte zusätzlich so viele Zähne vorgesehen werden, daß in jeder Stellung des Bügels in seinem Rückhaltebereich sämtliche Zähne der Kupplungshälfte mit der geringeren Zähnezahl im Eingriff mit der Gegenverzahnung sind.

Eine besondere Weiterbildung sieht vor, daß die Klauen jeweils auf einem kleineren Durchmesser der Stirnflächen der Kupplungshälften als die Stirnverzahnungen angebracht sind. Da die Klauen prinzipiell eine höhere Tragfähigkeit als die Stirnverzahnungen besitzen, ist es sinnvoll, letztere möglichst weit außen auf den Kupplungshälften anzuordnen, um so bei gleicher Pressung ihre Tragfähigkeit zu erhöhen, da sie dann an einem größtmöglichen Hebelarm wirken.

Nach einer weiteren Ausgestaltung der Erfindung ist vorgesehen, daß an einer Kupplungshälfte die verzahnten Abschnitte und die Klauen jeweils erhaben ausgeführt sind und die verzahnten Abschnitte und die Klauen relativ zueinander so angeordnet sind, daß die verzahnten Abschnitte, radial auswärts gesehen, ausschließlich über den Lücken zwischen den Klauen liegen. Eine solche Gestaltung vereinfacht die Fertigung, denn das die Verzahnung herstellende Fräs- oder Schleifwerkzeug findet in den Lücken zwischen den Klauen einen Auslauf.

Nach einer weiteren Ausgestaltung der Erfindung ist vorgesehen, daß an der anderen Kupplungshälfte die verzahnten Abschnitte und die Klauen durch eine entsprechende Ausnehmung gebildet werden, wobei die Stirnflächen der Klauen, gesehen vom Zahnkopf aus, in axialer Richtung auf die Höhe der Zahnfußebene der Verzahnung oder hinter dieser Ebene liegen. Auch diese Gestaltung ist fertigungstechnisch vorteilhaft. Auch hier findet das die Verzahnung herstellende Fräs- oder Schleifwerkzeug einen Auslauf, ohne daß die Gefahr einer Beschädigung der Klauen besteht.

Eine besonders vorteilhafte Weiterbildung der Erfindung sieht vor, daß an jedem Fahrgasthaltebügel zwei Kupplungen zum Einsatz kommen, von denen jede so an einem Ende des Rückhaltebügels angebracht ist, daß die Kupplungen durch Bewegungen in entgegengesetzter Richtung gelüftet werden. Der Einsatz zweier Kupplungen gewährleistet eine echte Redundanz - jedes der Sicherheitselemente ist doppelt vorhanden. Darüber hinaus wird die Sicherheit gegen Versagen aber auch dadurch erhöht, daß beispielsweise Fliehkräfte, die die Tendenz haben, die eine Kupplung zu lüften, die andere Kupplung gleichzeitig fest in eingerückter Stellung halten.

Eine weitere besonders vorteilhafte Ausgestaltung sieht schließlich vor, daß an jedem Fahrgasthaltebügel zwei Kupplungen zum Einsatz kommen, die um die halbe Zahnteilung zueinander versetzt sind. Die Kupplungshälften sind dabei so eingebaut, daß die Stirnverzahnungen der beiden Kupplungen wechselseitig sperren, indem die Stirnverzahnungen der einen Kupplung sich außer Eingriff befinden, wenn die Stirnverzahnungen der anderen Kupplung voll im Eingriff stehen. Diese Gestaltung hat den Vorteil, daß gerade während des Nachzurrens die Sicherheit erhöht wird. Die Zähne der Kupplung können durch den Versatz größer ausgeführt werden, wie die Rastteilung der Hälfte der Zahnteilung entspricht. Der oben für den Fall einer einzelnen Kupplung beschriebene Fall, daß der Fahrgasthaltebügel ausgerechnet dann schlagartig belastet wird, wenn sich die Stirnverzahnungen in den Kupplungshälften "Zahnkopf an Zahnkopf" gegenüberstehen und die Stirnverzahnung dann versagen kann, kann hier nicht auftreten. Denn eine der Stirnverzahnungen steht immer im Eingriff. Zudem steht bei einer solchen Kupplungsanordnung für das Nachzurren eine größere Anzahl von Rastpositionen zur Verfügung, was die Genauigkeit des Nachzurrens verbessert.

Weitere, besonders vorteilhafte Ausgestaltungen ergeben sich aus den übrigen Unteransprüchen und werden anhand der nachfolgenden Beschreibung erkennbar.

Im folgenden wird ein Ausführungsbeispiel der Erfindung anhand von Zeichnungen näher erläutert.

Es zeigen:
- Fig. 1: eine schematische Ansicht eines auf ein Fahrgestell montierten Sitzes mit einem Fahrgasthaltebügel in geschlossener Stellung
- Fig. 2: eine Seitenansicht des Sitzes mit einem in zwei verschiedenen Stellungen des Rückhaltebereiches befindlichen Fahrgasthaltebügel
- Fig. 3: eine Schnittansicht der Sperreinrichtung
- Fig. 4: eine Draufsicht auf eine Kupplungshälfte
- Fig. 5: die Seitenansicht der in Fig. 4 dargestellten Kupplungshälfte
- Fig. 6: eine Seitenansicht bzw. Schnittzeichnung der zu den Figuren 4 und 5 komplementären Kupplungshälfte
- Fig. 7: eine Draufsicht auf die zur Fig. 4 komplementären Kupplungshälfte
- Fig. 8: einen mit zwei Sperreinrichtungen ausgerüsteten Fahrgasthaltebügel

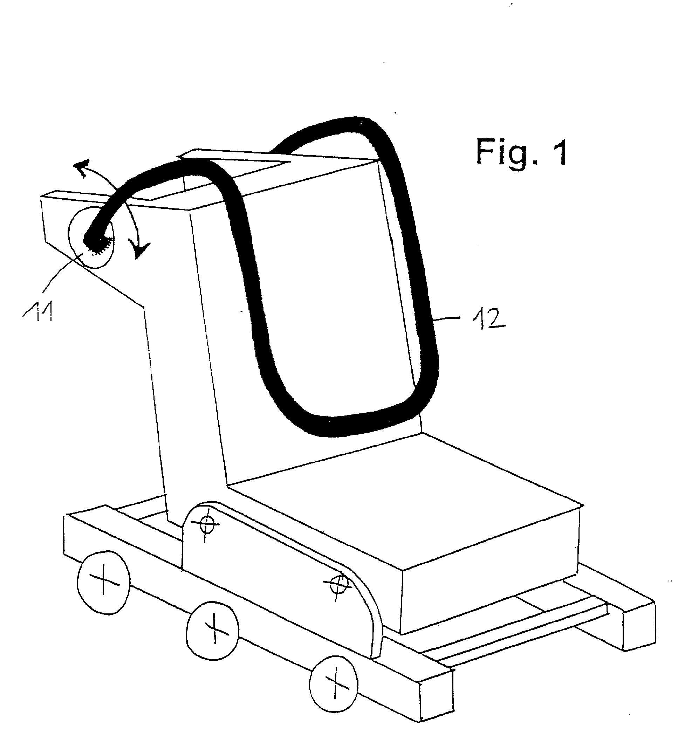

Die Fig. 1 zeigt einen auf einem Fahrgestell angebrachten Sitz. Der Rahmen des Sitzes trägt einen Fahrgasthaltebügel 12, der, wie dies durch die Pfeilung angedeutet ist, auf- und zuschwenkbar ist. Der Fahrgasthaltebügel ist am Flansch 11 der Sperreinrichtung angeschweißt. Die eigentliche Sperreinrichtung befindet sich hinter der Sitzlehne und ist in Fig. 1 nicht erkennbar. Dieser Fahrgasthaltebügel wirkt ähnlich wie ein Anschnallgurt. Die beiden in Form eines nach unten offenen U ausgebildeten Abschnitte des Fahrgasthaltebügels stützen den Fahrgast im Schulterbereich ab. Die beiden vertikal längs der Lehne verlaufenden Abschnitte des Fahrgasthaltebügels stützen den Fahrgast durch Auflage im Brustbereich nach vorn und seitlich ab. Der horizontal quer zur Lehne verlaufenden Bereich des Fahrgasthaltebügels stützt den Beckenbereich ab. Der Vollständigkeit halber sei festgehalten, daß das System selbstverständlich auch dann funktioniert, wenn statt dem Fahrgestell ein Hub- oder Schwenkgestell verwendet wird. Das Fahrgestell etc. kann auch in den Sitz integriert sein. Das System kann in gleicher Weise zum Einsatz kommen, um einen Fahrgast auf einer Liegefläche zu sichern oder einen stehenden Fahrgast durch Andrücken an eine entsprechende Lehne zu sichern. Im übrigen ist es auch nicht zwangsläufig erforderlich, daß der Bügel von oben auf den Fahrgast einschwenkt. Der Bügel kann auch von seitlich auf den Fahrgast einschwenken.

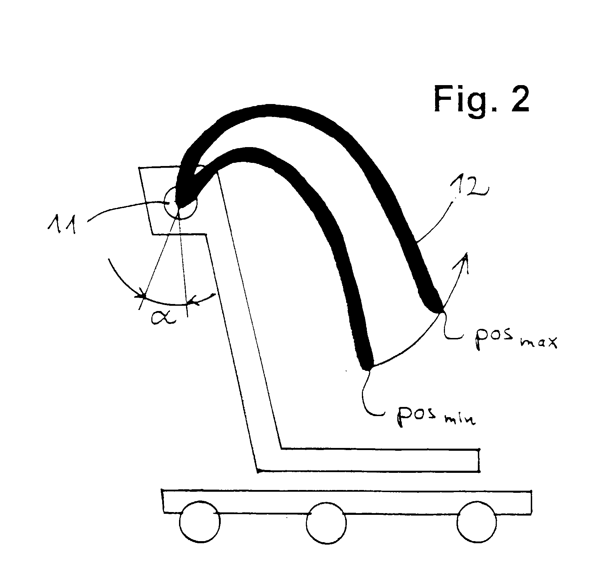

Fig. 2 zeigt eine Seitenansicht des in Fig. 1 dargestellten Fahrgastrückhaltesystems. Die eigentliche Sperreinrichtung ist wiederum nicht sichtbar. Gezeigt werden lediglich der Fahrgasthaltebügel 12 und der zur Befestigung des Fahrgasthaltebügels 12 dienende Flansch 11 der Sperreinrichtung. Der Fahrgasthaltebügel läßt sich nicht lediglich in einer einzigen Stellung verriegeln. Vielmehr besitzt der Fahrgasthaltebügel einen als Rückhaltebereich zu bezeichnenden Schwenkbereich. Wenn der Fahrgasthaltebügel in diesem, als Rückhaltebereich zu bezeichnenden Schwenkbereich verriegelt ist, ist der Fahrgast jedenfalls so weit am Sitz gesichert, daß er unter dem Einfluß der Flieh- und Schwerkräfte nicht aus dem Sitz herausfallen kann. In Fig. 2 sind 2 Bügelpositionen gezeigt. Die als posₘᵢₙ dargestellte Bügelposition ist die Position, in der der Fahrgasthaltebügel sich in seiner engsten Schließstellung befindet. Demgegenüber zeigt die als posₘₐₓ gekennzeichnete Position des Fahrgasthaltebügels die weiteste Schließstellung, d. h. die Schließstellung, bei der gerade noch eine hinreichende Sicherheit gegen Herausfallen des Fahrgastes gegeben ist. Wenn der Fahrgasthaltebügel weiter in die in Fig. 2 durch den Pfeil markierte Richtung geschwenkt wird, verläßt er die Rückhalteposition und ist in einer Öffnungsstellung. Eine solche Öffnungsstellung darf der Fahrgasthaltebügel während der Fahrt keinesfalls einnehmen.

Bei modernen Fahrgeschäften treten ganz erhebliche Beschleunigungskräfte auf. Um das Fahrerlebnis zu steigern, werden die Fahrgestelle gelegentlich auch in einer Position angehalten, in der der Fahrgast kopfüber nach unten hängt. Mangels Fliehkräften muß der Fahrgasthaltebügel in diesem Fall den Fahrgast gegen die Schwerkraft im Sitz halten. Aufgrund dessen genügt es bei modernen Fahrgeschäften nicht mehr, den Fahrgasthaltebügel in irgendeine Position zu bringen, die "nur" eine hinreichende Sicherheit gegen Herausfallen des Fahrgastes bietet. Vielmehr ist es erforderlich, daß der Fahrgasthaltebügel in einer optimal an den Körper des jeweiligen Fahrgastes anliegenden Position verriegelt werden kann. Nur so kann beispielsweise verhindert werden, daß sich der Fahrgast, wenn die Kabine in einer Stellung, in der sich der Fahrgast kopfüber nach unten hängend befindet, angehalten wird, in dem Moment, indem die Schwerkraft die Fliehkraft überwindet, aus dem Sitz löst und ein Stückweit in den Haltebügel fällt.

Ein optimales Anliegen des Fahrgasthaltebügels an den Körper des jeweiligen Fahrgastes, abgestimmt auf dessen individuelle Statur, wird durch ein sog. Nachzurren erreicht.

Der Schließvorgang läuft insgesamt wie folgt ab: Zunächst wird der Fahrgasthaltebügel automatisch oder von Hand so weit geschlossen, bis die Sperreinrichtung einrastet. Die Sperreinrichtung rastet ein, sobald der Fahrgasthaltebügel eine solche Position erreicht hat, in der, gleichgültig welche Statur der Fahrgast hat, jedenfalls eine hinreichende Sicherheit gegen ein Herausfallen des Fahrgastes gegeben ist. Diese Position ist gleichzeitig eine solche Position des Fahrgasthaltebügels, bei der selbst beleibte Fahrgäste noch genügend Platz zwischen dem Fahrgasthaltebügel und der Sitzfläche finden. Aufgrund dessen ist bis zu diesem Punkt auf einfache Art und Weise und dennoch gefahrlos ein Schließen des Fahrgasthaltebügels möglich.

Um den Fahrgasthaltebügel in eine optimale Rückhalteposition in Abhängigkeit von der jeweiligen Statur des Fahrgastes zu bringen, wird nun nachgezurrt. Dieses Nachzurren erfolgt im Regelfall durch den Fahrgast selbst oder durch das Aufsichtspersonal des Fahrgeschäftes. Das Aufsichtspersonal drückt bei jedem Fahrgast den Haltebügel soweit gegen den Körper des Fahrgastes, daß dieser eng, aber gleichwohl bequem vom Haltebügel gegen den Sitz gedrückt wird. Der entscheidende Punkt ist der, daß ein solches Nachzurren möglich ist, ohne das das Aufsichtspersonal die Sperrwirkung der Sperreinrichtung aufheben muß. Denn nur auf diese Art und Weise kann sichergestellt werden, daß alle Fahrgast-haltebügel bei Fahrtantritt auch tatsächlich in ihrer geschlossenen Stellung gesperrt sind. Müßte oder könnte das Aufsichtspersonal die Sperreinrichtung zum Nachzurren lösen, so ließe sich nicht zuverlässig ausschließen, daß das erneute Sperren des Fahrgasthaltebügels womöglich vergessen wird.

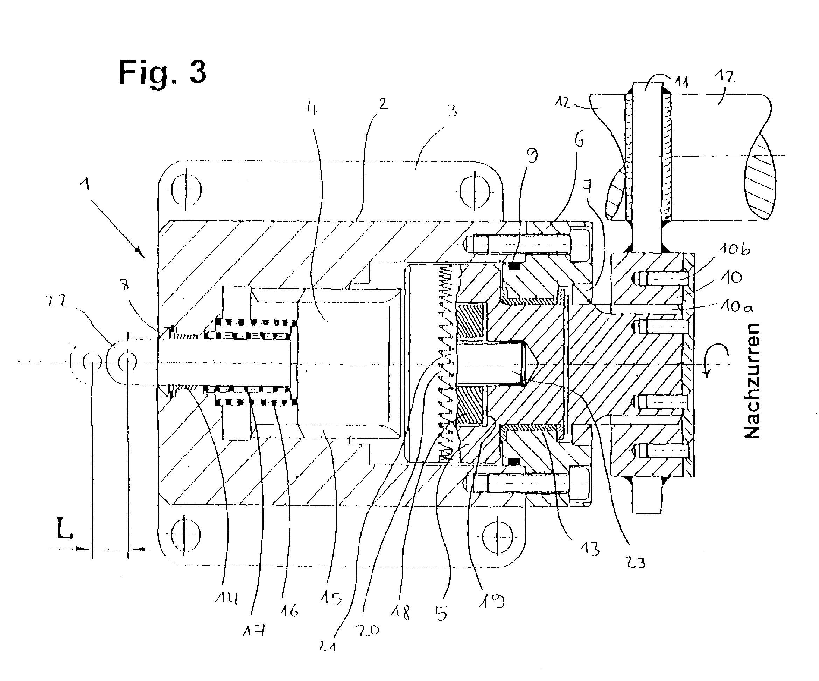

Fig. 3 zeigt eine Schnittansicht durch eine erfindungsgemäße Ausführung der Sperreinrichtung 1. Die Sperreinrichtung besteht aus einem Gehäusekörper 2, der eine Flanschplatte 3 trägt, mit der die Sperreinrichtung am Rahmen des Sitzes oder am Fahrgestell befestigt werden kann. Der Gehäusekörper 2 nimmt eine Hälfte 4 einer Wellenkupplung und die dazu komplementäre andere Hälfte 5 der Wellenkupplung auf. Der Gehäusekörper ist durch den Gehäusedeckel 6 verschlossen. Das so gebildete Gehäuse ist gegenüber der Umgebung abgedichtet. Für die Abdichtung sorgen am Gehäusedeckel die Schnurdichtung 9 und der Radialwellendichtring 7. Auf der dem Gehäusedeckel abgewandten Seite ist der Gehäusekörper durch einen weiteren Radialwellendichtring 8 abgedichtet. Eine Ölfüllung des Gehäuses stellt die erforderliche Schmierung der Kupplungshälften sicher. Die gehäusefeste Kupplungshälfte 4 trägt an ihrem Außenumfang abschnittweise ein Keilnutprofil 15. Indem dieses Keilnutprofil 15 mit einem entsprechenden Gegenprofil des Gehäuses im Eingriff steht, ist die gestellfeste Kupplungshälfte 4 verdrehfest im Gehäuse gehalten. Die gestellfeste Kupplungshälfte 4 kann jedoch in axialer Richtung gegen die Spannung der beiden redundanten Federn 16 und 17 verschoben werden.

Die andere, dazu komplementäre Kupplungshälfte 5 ist bügelfest. An ihrem, dem Kupplungsbereich abgewandten Ende trägt sie ein Keilnutprofil 10 a, auf das ein Flansch 10, der ein entsprechendes Gegenprofil trägt, verdrehfest aufgeschoben ist und mittels der Schrauben 10 b axial gesichert wird. An diesem Flansch ist über eine Platte 11 der Haltebügel 12 befestigt. Die bügelfeste Kupplungshälfte 5 ist über die Lagerbuchse 13 drehbar im Gehäusedeckel 6 gelagert. Die gestellfeste Kupplungshälfte 4 besitzt einen Zentrierstift 23, der bei eingerückter Kupplung in einer entsprechenden Führung der bügelfesten Kupplungshälfte 5, die im Führungsbereich mit einer Lagerbuchse versehen ist, aufgenommen wird. Die Kupplungshälften werden so gegeneinander zentriert, zugleich werden die eigentlichen Sperr- bzw. Kupplungsorgane von Querkräften freigehalten.

Um die Details der eigentlichen Sperrorgane darstellen zu können, ist die gestellfeste Kupplungshälfte 4 ungeschnitten dargestellt, während die bügelfeste Kupplungshälfte mittig geschnitten gezeigt wird - mit Ausnahme ihres der Stirn' verzahnung nahen Bereiches - hier ist die Zeichnung auf den ungeschnittenen Umfang der Kupplungshälfte 5 aufgebrochen.

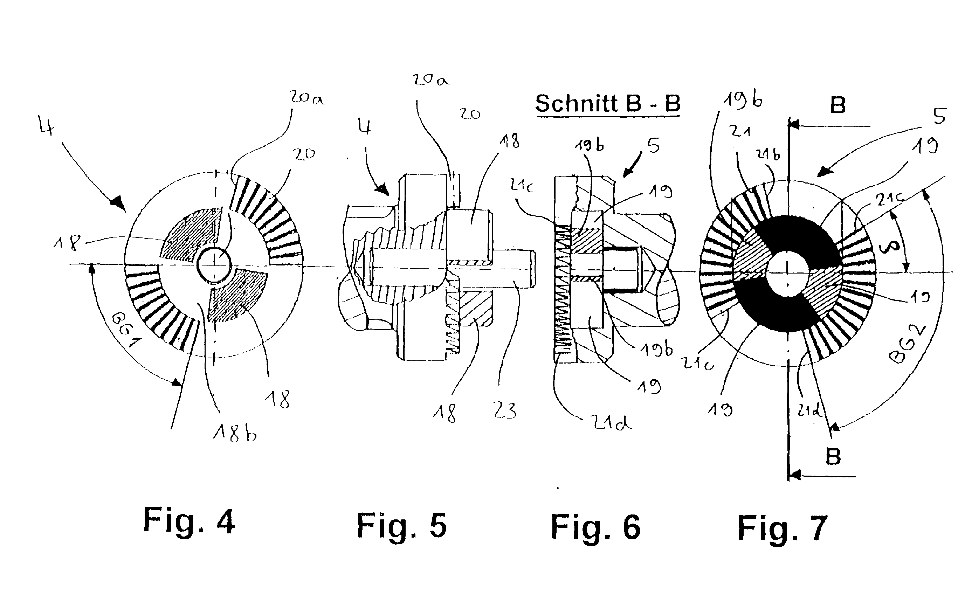

Jede der beiden Kupplungshälften 4 und 5 trägt am Außenumfang ihrer gegenüberliegenden Stirnseiten eine rundum laufende Stirnverzahnung. Gleichzeitig trägt die gestellfeste Kupplungshälfte 4, konzentrisch zur Verzahnung angeordnet und auf einem kleineren Umfang wie diese liegend, zwei Klauen 18 (in Fig. 3 mit Feinschraffierung unterlegt). Komplementär dazu besitzt die bügelfeste Kupplungshälfte 5 zwei Taschen 19, die in eingerücktem Zustand der Kupplung die beiden Klauen 18 der gestellfesten Kupplungshälfte 4 aufnehmen. Die beiden Taschen sind durch zwei hier nicht gezeigte Stege (vgl. jedoch Fig. 7, dort Taschen schwarz und Stege fein schraffiert) getrennt. Diese Stege der bügelfesten Kupplungshälfte 19 und die Klauen der gestellfesten Kupplungshälfte 18 legen die beiden Kupplungshälften selbständig gegeneinander fest. Dabei haben die Taschen in Umfangsrichtung eine größere Erstreckung als die Klauen. Mithin werden durch die Klauen und Taschen (wenn man zunächst nur einmal Klauen und Taschen allein betrachtet) die beiden Kupplungshälften mit Verdrehspiel gegeneinander festgelegt.

Dieses Verdrehspiel ist so bemessen, daß (wenn wiederum allein die Kombination aus Klauen und Taschen betrachtet wird), der Fahrgasthaltebügel zwischen der in Fig. 2 gezeigten engsten Schließstellung posₘᵢₙ und der weitest zulässigen Schließstellung posₘₐₓ hin- und hergeschwenkt werden kann.

Die Stirnverzahnungen sind nun so gestaltet, daß jeweils eine Flanke der Zähne schräg ausgeführt ist, während die andere Flanke senkrecht zur Drehrichtung der Kupplungshälften orientiert ist. Dies gestattet das Nachzurren.

Das Nachzurren geht wie folgt vonstatten: Beim Nachzurren wird die bügelfeste Kupplungshälfte 5 in Richtung des rechts in Fig. 3 an der Mittellinie 3 eingezeichneten Pfeiles gedreht. Aufgrund dieser Drehung gleiten die abgeschrägten Zahnflanken der bügelfesten Kupplungshälfte 5, die komplementären, abgeschrägten Zahnflanken der gestellfesten Kupplungshälfte 4 entlang. Die gestellfeste Kupplungshälfte 4 wird dadurch gegen die Spannung der aus Redundanzgründen doppelt vorhandenen Federn 16 und 17 ein Stück in axialer Richtung nach links gedrückt, d. h. ein Stückweit gelüftet. Und zwar soweit, bis die Zähne außer Eingriff kommen. Da der Klauensatz in axialer Richtung wesentlich tiefer ineinandergreift als die Stirnverzahnungen, bleibt der Klauensatz auch in diesem Augenblick, indem sich an beiden Kupplungshälften die Zahnköpfe gegenüberliegen, formschlüssig gegen ein Aufschwenken in eine nicht mehr dem Rückhaltebereich zuzuordnende Stellung.

Sobald die bügelfeste Kupplungshälfte noch ein kleines Stück weitergedreht wird, so daß sich nun an den Kupplungshälften nicht mehr die Zahnköpfe gegenüberliegen, rasten die Stirnverzahnungen wieder ineinander ein. Damit ist der Fahrgasthaltebügel in seiner neuen Verzurrstellung wiederum formschlüssig verriegelt.

Das vollständige Lüften der Kupplung bei Fahrtende erfolgt, indem die gestellfeste Kupplungshälfte 4 an ihrer Lasche 22 in axialer Richtung um den Lüftweg L nach links gezogen wird, wodurch sowohl die Verzahnung als auch die Klauenkupplung außer Eingriff kommen.

Die Fig. 4 - 7 zeigen weitere Details.

Die Fig. 4 ist eine Stirnansicht der gestellfesten Kupplungshälfte. Die Fig. 5 ist eine Seitenansicht von links auf die gestellfeste Kupplungshälfte 4. Die Fig. 7 ist eine Stirnansicht der bügelfesten Kupplungshälfte. Die Fig. 6 ist eine Schnittansicht auf die bügelfeste Kupplungshälfte. Einzig im Bereich der Stirnverzahnung ist die Fig. 6 nicht geschnitten. Im Bereich der Stirnverzahnung ist die Darstellung bis auf den ungeschnittenen Außenumfang der Kupplungshälfte 5 aufgebrochen.

Bei dieser Ausführungsform ist die Stirnverzahnung an den Kupplungshälften nicht voll umlaufend angebracht. Vielmehr ist die Stirnverzahnung an der gestellfesten Kupplungshälfte 4 nur zweimal über jeweils einen Bogenabschnitt der Bogenlänge BG 1 angebracht. An der bügelfesten Kupplungshälfte ist die Stirnverzahnung nur jeweils zweimal über einen Bogenabschnitt der Bogenlänge BG 2 angebracht. Dieses lediglich bogenabschnittsweise Anbringen der Stirnverzahnung vereinfacht die Herstellung erheblich.

Die die Stirnverzahnung tragenden Bogenabschnitte BG 2 sind an der bügelfesten Kupplungshälfte größer gewählt als die die Verzahnung an der gestellfesten Kupplungshälfte tragenden Bogenabschnitte BG 1. Dadurch ist sichergestellt, daß in jeder Rückhalteposition des Fahrgasthaltebügels sämtliche Zähne der Stirnverzahnung der gestellfesten Kupplungshälfte im Eingriff mit einer entsprechenden Anzahl von Zähnen an der bügelfesten Kupplungshälfte stehen. Die Differenz der Bogenabschnitte der Bogenlängen BG 2 und BG 1 korrespondiert mit dem Winkel, den der Fahrgasthaltebügel innerhalb seines Rückhaltebereiches unter Ausnutzung des Spieles der Klauenkupplung geschwenkt werden kann.

Die beiden Klauen sind in der Fig. 4 mit feiner Schraffierung dargestellt. In der Fig. 5 sieht man diese Klauen in der Seitenansicht. Ihre Umfangsflächen sind hier unschraffiert dargestellt, während ihre sichtbaren Stirnflächen eine grobe Schraffierung tragen. In der Fig. 7 sind die die Klauen 18 der Kupplungshälfte 4 aufnehmenden Taschen 19 der bügelfesten Kupplungshälfte 5 der Übersicht halber schwarz ausgefüllt. Die Stege 19 b zwischen den beiden Taschen, die die Gegenklauen bilden, sind schraffiert dargestellt.

In der Fig. 6 sind die (ungeschnittenen) Stirnflächen des einzig sichtbaren Steges 19 b der Übersicht halber schraffiert. Die innere Umfangsfläche des Steges ist unschraffiert dargestellt.

Bei der gestellfesten Kupplungshälfte 4 sind sowohl die Stirnverzahnung 20 als auch der Klauensatz 18 gegenüber der mit dem Zahnfuß identischen Stirnfläche der Kupplung erhaben (vgl. Fig. 5). Bei der bügelfesten Kupplungshälfte sind demgegenüber sowohl die Stirnverzahnung als auch die aus Taschen und dazwischenliegenden Stegen gebildeten Klauen in die Oberfläche der Kupplung eingeschnitten (vgl. Fig. 6).

Wie Fig. 4 zeigt, ist jede Stirnverzahnung so am Umfang der gestellfesten Kupplungshälfte angeordnet, daß sie vollständig gegenüber einer Lücke zwischen den beiden Klauen liegt. Auf diese Art und Weise läßt sich die Verzahnung problemlos herstellen, da das die Verzahnung bei der Herstellung schneidende bzw. schleifende Werkzeug in die Lücke zwischen den beiden Klauen auslaufen kann.

Ähnlich ist die bügelfeste Kupplungshälfte gestaltet (vgl. Fig. 6). Die Ebene, in der sich die beiden Klauen 19 b befinden, ist hier gegenüber der Ebene der Verzahnung 21 so weit zurückgesetzt, daß das die Verzahnung schneidende oder schleifende Werkzeug in den Bereich oberhalb der Stirnseite der Klauen auslaufen kann.

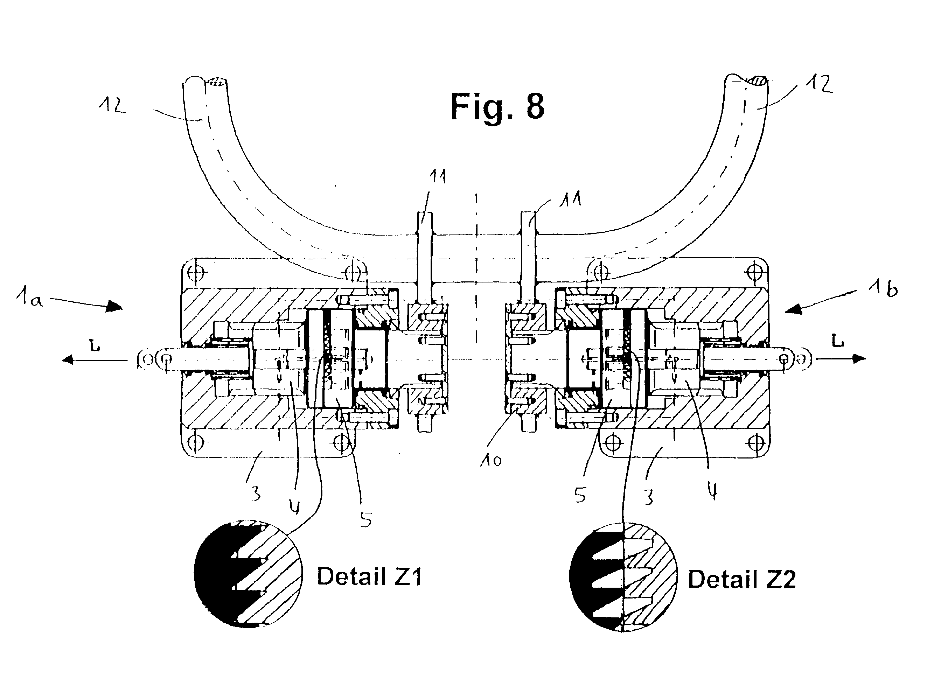

Die Fig. 8 zeigt einen Fahrgasthaltebügel, zu dessen Verriegelung zwei Sperreinrichtungen zum Einsatz kommen. Die Sperreinrichtungen sind baugleich, was den Fertigungsaufwand verringert, jedoch sind die Verzahungen spiegelbildlich ausgeführt. Sie unterscheiden sich lediglich in ihrer Befestigung am Fahrgasthaltebügel. Die Befestigung am Fahrgasthaltebügel wird dabei so gewählt, daß an der Kupplung der linken Sperreinrichtung 1 a in der gezeigten Position des Fahrgasthaltebügels die Stirnverzahnungen voll miteinander im Eingriff stehen (vgl. Detail Z 1). Demgegenüber ist die rechte Sperreinrichtung 1 b so am Fahrgasthaltebügel befestigt, daß bei ihr die Stirnverzahnungen außer Eingriff sind, da sich die Zahnköpfe der Stirnverzahnungen an beiden Kupplungshälften gegenüberliegen (vgl. Detail Z 2).

Beide Sperreinrichtungen sind so ausgelegt, daß sie jeweils für sich allein die volle Belastung des Fahrgasthaltebügels aufnehmen können. Durch die oben beschriebene, versetzte Anordnung der Sperreinrichtungen relativ zueinander wird folgendes erreicht: Die Stirnverzahnungen der beiden Sperreinrichtungen 1 a und 1 b rasten beim Nachzurren wechselweise ein und werden wechselweise gelüftet. Dadurch wird die Anzahl der Positionen, in der der Fahrgasthaltebügel verrastet werden kann, verdoppelt. Der Fahrgasthaltebügel ist feiner einstellbar.

Überdies wird eine optimale Sicherheit erreicht. Denn der Fahrgasthaltebügel ist stets durch zwei Klauenkupplungen vor einem Aufschwenken aus seinem Rückhaltebereich heraus gesichert. Zusätzlich ist immer eine Kupplung mit ihren Stirnverzahnungen im Eingriff. Es gibt, anders als bei Verwendung lediglich einer Sperreinrichtung, keine Zwischenstellung, bei der die Stirnverzahnungen so außer Eingriff gebracht werden können, daß nur noch die Klauenkupplung im Eingriff ist. Dadurch ist ein zahnweises Lösen der Sperreinrichtung nicht möglich, im Gegensatz zu bisher ausgeführten Systemen.

Zudem sind die Kupplungen in entgegengesetzter Richtung L (jeweils angedeutet durch die Pfeile und den großen Buchstaben L) zu lüften. Es ist also ausgeschlossen, daß das System durch die Fliehkräfte oder ähnliches geöffnet werden kann. Denn Fliehkräfte, die auf eine Sperreinrichtung tendenziell öffnend wirken, wirken auf die anderer Sperreinrichtung in anderer Richtung, also tendenziell schließend.

### Bezugszeichenliste:

- 1: Sperreinrichtung
- 1 a: Linke von zwei Sperreinrichtungen
- 1 b: Rechte von zwei Sperreinrichtungen
- 2: Gehäusekörper der Sperreinrichtung
- 3: Flanschplatte der Sperreinrichtung
- 4: Gestellfeste Kupplungshälfte
- 5: Bügelfeste Kupplungshälfte
- 6: Gehäusedeckel
- 7: Radialwellendichtring
- 8: Radialwellendichtring
- 9: Schnurdichtung
- 10: Flansch
- 10 a: Keilnutprofil
- 10 b: Axiale Halteschrauben
- 11: Halteplatte
- 12: Fahrgasthaltebügel
- 13: Lagerbuchse
- 14: Lagerbuchse
- 15: Keilnutprofil
- 16: Feder
- 17: Feder
- 18: Klaue
- 18 b: Lücke bzw. Zwischenraum zwischen zwei Klauen
- 19: Tasche bzw. Ausnehmung
- 19 b: Steg zwischen zwei Taschen
- 20: Stirnverzahnung
- 20 a: erster Zahn
- 21: Stirnverzahnung, komplementärer Teil
- 22: Lasche zum Lüften der Kupplung
- 23: Zentrierbolzen bzw. -stift

## Patentansprüche

1. Ein Fahrgast-Rückhaltesystem, insbesondere für Fahrgeschäfte wie Achterbahnen, Schiffsschaukeln und dergl., umfassend wenigstens einen biegesteifen, schwenkbar angebrachten Fahrgast-Haltebügel, sowie mindestens eine formschlüssig wirkende Sperreinrichtung, die in ihrem aktivierten Zustand den Fahrgasthaltebügel gegen Aufschwenken verriegelt und ein Weiterschließen des Fahrgasthaltebügels in eine näher am Körper des Fahrgastes anliegende, ebenfalls gegen Aufschwenken verriegelte Position (Nachzurren) ermöglicht, wobei der Fahrgasthaltebügel während des Nachzurrens fortwährend formschlüssig gesichert bleibt, **dadurch gekennzeichnet, daß** die Sperreinrichtung (1) aus zwei in ihrer Sperrwirkung unterschiedlichen Sperrsystemen besteht, die in ihrem aktivierten Zustand jeweils für sich allein den Fahrgasthaltebügel (12) in Aufschwenkrichtung formschlüssig sichern, wobei die Sperrorgane (18, 19b) des einen Sperrsystemes mit einem Spiel ineinandergreifen, welches das Weiterschließen des Fahrgast-haltebügels ermöglicht, während die Sperrorgane (20, 21) des anderen Sperrsystems durch das Weiterschließen aus einer bestehenden Eingriffsstellung in eine andere, den Fahrgasthaltebügel (12) in einer neuen Position gegen Aufschwenken verriegelnde Eingriffsstellung gebracht werden.

2. Fahrgastrückhaltesystem nach Anspruch 1, **dadurch gekennzeichnet, daß** die Sperreinrichtung als in axialer Richtung lüftbare Wellen-Kupplung ausgeführt ist, deren Kupplungshälften jeweils die komplementären Sperrorgane beider Sperrsysteme tragen, wobei eine Kupplungshälfte (5) am Fahrgasthaltebügel festgelegt ist und die andere Kupplungshälfte (4) axial verschiebbar und unverdrehbar gestellfest gehalten ist.

3. Fahrgast-Rückhaltesystem nach einem der vorhergehenden Ansprüche, **dadurch gekennzeichnet, daß** das Sperrsystem, dessen Sperrorgane so ineinandergreifen, daß zwischen ihnen Verdrehspiel besteht, als Klauensatz (18, 19b) ausgeführt ist.

4. Fahrgast-Rückhaltesystem nach einem der vorhergehenden Ansprüche, **dadurch gekennzeichnet, daß** das das Verdrehspiel in Aufschwenkrichtung eliminierende Verbindungssystem aus einer Paarung bzw. Paarungen von sich an beiden Kupplungshälften ganz oder teilweise gegenüberliegenden Stirnverzahnungen (20, 21) ausgeführt ist.

5. Fahrgast-Rückhaltesystem nach einem der vorhergehenden Ansprüche, **dadurch gekennzeichnet, daß** das Sperrsystem, dessen Sperrorgane so ineinandergreifen, daß zwischen ihnen Verdrehspiel besteht, als Klauensatz (18, 19b) und das andere Verbindungssystem aus einer Paarung bzw. Paarungen von sich an beiden Kupplungshälften ganz oder teilweise gegenüberliegenden Stirnverzahnungen (20, 21) ausgeführt ist.

6. Fahrgast-Rückhaltesystem nach Anspruch 5, **dadurch gekennzeichnet, daß** die Klauen (18, 19b) bei eingerückter Kupplung in axialer Richtung soweit ineinandergreifen, daß die verzahnten Abschnitte (20, 21) der Kupplungs-hälften beim Nachzurren außer Eingriff gebracht werden können, ohne daß die Klauen (18, 19b) außer Eingriff kommen.

7. Fahrgast-Rückhaltesystem nach Anspruch 5 oder 6, **dadurch gekennzeichnet, daß** die Zähne der Stirnverzahnungen (20, 21) jeweils auf einer Zahnseite schräge Zahnflanken aufweisen, welche unter Drehmoment in Schließrichtung des Fahrgast-Haltebügels (12) aufeinander abgleiten, während auf der jeweils anderen Zahnseite die Zahnflanken so gestaltet sind, daß sie auch unter Drehmomenteinwirkung nicht aufeinander abgleiten können.

8. Fahrgast-Rückhaltesystem nach einem der Ansprüche 5 bis 7, **dadurch gekennzeichnet, daß** beide Kupplungshälften (4, 5) in ihrer Umfangsrichtung nur an einem oder mehreren Abschnitten mit einer Verzahnung (20, 21) versehen sind, wobei sich jeder verzahnte Abschnitt an der gestellfesten Kupplungshälfte über einen kleineren oder größeren Bogenabschnitt (BG 1 bzw. BG 2) erstreckt, als der mit ihm zusammenarbeitende verzahnte Abschnitt der dem Haltebügel zugeordneten Kupplungshälfte.

9. Fahrgast-Rückhaltesystem nach einem der Ansprüche 5 bis 8, **dadurch gekennzeichnet, daß** die verzahnten Abschnitte auf beiden Kupplungs-hälften (4, 5) so angeordnet sind, daß in sämtlichen Rastpositionen des Fahrgast-haltebügels (12) alle Zähne jedes sich über einen kleineren Bogenabschnitt (BG 1) erstreckenden verzahnten Abschnittes mit den Zähnen des mit ihm an der anderen Kupplungshälfte zusammenarbeitenden verzahnten Abschnitten in Eingriff befinden.

10. Fahrgast-Rückhaltesystem nach einem der Ansprüche 5 bis 19, **dadurch gekennzeichnet, daß** die Differenz (δ) zwischen dem kleineren Bogenabschnitt (BG 1) und dem größeren Bogenabschnitt (BG 2) einem Winkel entspricht, um den der Fahrgasthaltebügel (12) bei erstmals aktivierter Sperreinrichtung in eine näher am Körper des Fahrgastes anliegende Position geschwenkt werden kann.

11. Fahrgast-Rückhaltesystem nach einem der Ansprüche 5 bis 10, **dadurch gekennzeichnet, daß** der kleinere Bogenabschnitt (BG 1) vorzugsweise einem Winkel (α) von etwa 75 Grad und der größere Bogenabschnitt (BG 2) vorzugsweise einem Winkel (α) von etwa 105 Grad entspricht.

12. Fahrgast-Rückhaltesystem nach einem der Ansprüche 5 bis 11, **dadurch gekennzeichnet, daß** die Klauen (18, 19b) jeweils an einer Stirnseite der Kupplungshälften angebracht sind.

13. Fahrgast-Rückhaltesystem nach Anspruch 12, **dadurch gekennzeichnet, daß** die Klauen (18, 19b) jeweils auf einem kleineren Durchmesser der Stirnseiten der Kupplungshälften (4, 5) als die Stirnverzahnungen (20, 21) angebracht sind.

14. Fahrgast-Rückhaltesystem nach Anspruch 12 oder 13, **dadurch gekennzeichnet, daß** an einer Kupplungshälfte die verzahnten Abschnitte und die Klauen jeweils erhaben ausgeführt sind, während an der anderen Kupplungshälfte die verzahnten Abschnitte und die Klauen durch entsprechende Ausnehmungen gebildet werden.

15. Fahrgast-Rückhaltesystem nach Anspruch 14, **dadurch gekennzeichnet, daß** an der Kupplungshälfte, an der die verzahnten Abschnitte (20) und die Klauen (18) erhaben ausgeführt sind, die verzahnten Abschnitte (20) und die Klauen (18) relativ zueinander so angeordnet sind, daß die verzahnten Abschnitte (20) radial-auswärts gesehen ausschließlich über den Lücken (18b) zwischen den Klauen (18) liegen.

16. Fahrgast-Rückhaltesystem nach Anspruch 14 oder 15, **dadurch gekennzeichnet, daß** an der Kupplungshälfte, an der die verzahnten Abschnitte (21) und die Klauen (19b) durch Ausnehmungen (19) gebildet werden, die Stirnflächen der Klauen (19b) in axialer Richtung auf der Höhe der Zahnfußebene der Verzahnung (21) oder, gesehen vom Zahnkopf aus, hinter dieser Ebene liegen.

17. Fahrgast-Rückhaltesystem nach einem der Ansprüche 3 bis 16, **dadurch gekennzeichnet, daß** an jedem Fahrgast-Haltebügel (12) zwei Kupplungen (1a und 1b) zum Einsatz kommen, von denen jede so an einem Ende des Rückhaltebügels angebracht ist, daß die Kupplungen (1a und 1b) durch Bewegungen in entgegengesetzter Richtung gelüftet werden.

18. Fahrgast-Rückhaltesystem nach einem der Ansprüche 3 bis 17, **dadurch gekennzeichnet, daß** an jedem Fahrgast-Haltebügel (12) zwei Kupplungen (1a und 1b) zum Einsatz kommen, die relativ zueinander so eingebaut sind, daß die Stirnverzahnungen (20, 21) der beiden Kupplungen (1a und 1b) wechselseitig sperren, indem die Stirnverzahnungen (20, 21) der einen Kupplung (1b) sich außer Eingriff befinden, wenn die Stirnverzahnungen der anderen Kupplung (1a) voll im Eingriff stehen und umgekehrt.

19. Fahrgast-Rückhaltesystem nach einem der vorhergehenden Ansprüche, **dadurch gekennzeichnet, daß** der Fahrgasthaltebügel (12) bei erstmals aktivierter Sperreinrichtung (1) noch um bis zu 30 Grad in eine näher am Körper des Fahrgastes anliegenden Position geschwenkt werden kann.

20. Fahrgast-Rückhaltesystem nach einem der vorhergehenden Ansprüche, **dadurch gekennzeichnet, daß** der Fahrgasthaltebügel (12) bei erstmals aktivierter Sperreinrichtung (1) je Stufe um etwa 4 Grad in eine näher am Körper des Fahrgastes anliegenden Position geschwenkt werden kann.

21. Fahrgastrückhaltesystem nach einem der Ansprüche 2 bis 21, **dadurch gekennzeichnet, daß** beide Kupplungshälften (4, 5) in einem allseitig abgedichteten Gehäuse untergebracht sind.

22. Fahrgastrückhaltesystem, **dadurch gekennzeichnet, daß** beide Kupplungshälften (4, 5) von einer Ölfüllung im Gehäuse (2, 6) geschmiert werden.
